# EUROPÄISCHE PATENTSCHRIFT

(11) **EP 3 490 825 B1**
(45) Veröffentlichungstag und Bekanntmachung des Hinweises auf die Patenterteilung: **01.07.2020**
(21) Anmeldenummer: 17745172.1
(22) Anmeldetag: 26.07.2017
(51) Int. Cl.: B60H 1/00

(54) **KLIMATISIERUNGSVORRICHTUNG FÜR EIN KRAFTFAHRZEUG UND VERFAHREN ZU DEREN BETRIEB**
AIR-CONDITIONING DEVICE FOR A MOTOR VEHICLE AND METHOD FOR THE OPERATION THEREOF
DISPOSITIF DE CLIMATISATION POUR VÉHICULE AUTOMOBILE ET PROCÉDÉ PERMETTANT DE FAIRE FONCTIONNER LEDIT DISPOSITIF

(30) Priorität: 01.08.2016 DE 102016214119
(43) Veröffentlichungstag der Anmeldung: 05.06.2019
(73) Patentinhaber: Volkswagen Aktiengesellschaft, 38440 Wolfsburg (DE)
(72) Erfinder: SCHMITT, Stefan, 38458 Velpke (DE); HOMANN, Gregor, 38442 Wolfsburg (DE); SCHMITT, Stefan, 38458 Velpke (DE)
(86) Internationale Anmeldenummer: PCT/EP2017/068945
(87) Internationale Veröffentlichungsnummer: WO 2018/024584

(56) Entgegenhaltungen:
- DE-A1-102010 042 127
- DE-A1-102012 111 672

## Beschreibung

Die Erfindung bezieht sich auf eine Klimatisierungsvorrichtung für ein Kraftfahrzeug, mit einem Kältemittelkreis, welcher
- einen Kompressor,
- eine eingangsseitig über einen ersten Kältemittel-Leitungsabschnitt mit dem Ausgang des Kompressors verbundene, von Anteilen eines in eine Fahrgastzelle des Kraftfahrzeugs leitbaren Luftstroms durchströmbare Innenwärmeübertrager-Anordnung, umfassend
   - ein erstes Luft/Kältemittel-Wärmeübertragersegment, das als Verdampfer des Kältemittelkreises betreibbar ist,
   - ein dem ersten Luft/Kältemittel-Wärmeübertragersegment in Strömungsrichtung des Kältemittels vorgeschaltetes, erstes Expansionsventil und
   - ein dem ersten Expansionsventil in Strömungsrichtung des Kältemittels vorgeschaltetes, zweites Luft/Kältemittel-Wärmeübertragersegment, das als Kondensator des Kältemittelkreises betreibbar ist,
- ein der Innenwärmeübertrager-Anordnung in Strömungsrichtung des Kältemittels nachgeschaltetes, zweites Expansionsventil und
- einen eingangsseitig über einen zweiten Kältemittel-Leitungsabschnitt mit dem zweiten Expansionsventil verbundenen, thermisch mit einer Wärmequelle oder -senke verbundenen Koppel-Wärmeübertrager, dessen Ausgang über einen dritten Kältemittel-Leitungsabschnitt mit dem Eingang des Kompressors verbunden ist,
umfasst.

Die Erfindung bezieht sich weiter auf zwei unterschiedliche Verfahren zum Betrieb einer derartigen Klimatisierungsvorrichtung.

Eine derartige Klimatisierungsvorrichtung und Verfahren zu ihrem Betrieb sind bekannt aus der WO 2012/028307 A1.

Diese Druckschrift offenbart eine Klimatisierungsvorrichtung für ein Kraftfahrzeug, deren Kältemittelkreis sowohl in einem Wärmepumpenmodus als auch in einem Kühlmodus betreibbar ist. Wie bei Kältemittelkreisen üblich, umfasst dieser einen Kompressor zur Verdichtung des Kältemittels. Dem Kompressor kältemittelseitig nachgeschaltet ist eine Innenwärmeübertrager-Anordnung mit zwei Luft/Kältemittel-Wärmeübertragersegmenten, von denen das kältemitteleingangsseitige in allen Betriebsmoden stets als Kondensator betrieben wird und deren kältemittelausgangsseitiges bedarfsweise entweder als Kondensator oder als Verdampfer betrieben werden kann. Der Begriff des Kondensators ist hier weit zu verstehen und umfasst auch solche Vorrichtungen, die in Kältemittelkreisen mit nicht-kondensierbarem Kältemittel als Gaskühler wirken. Die Innenwärmeübertragersegmente sind von einem Luftstrom durchströmbar, der über Verteilkanäle in den Innenraum des Kraftfahrzeugs geleitet werden kann. Zwischen den beiden Wärmeübertragersegmenten der Innenwärmeübertrager-Anordnung ist ein erstes Expansionsventil angeordnet, mit dem ein Druckunterschied zwischen den beiden Wärmeübertragersegmenten einstellbar ist. Weiter umfasst der bekannte Kältemittelkreis einen Außenwärmeübertrager, der als Luft/Kältemittel-Wärmeübertrager ausgebildet ist und den Kältekreis thermisch mit der Außenluft koppelt. Zudem ist ein zweites Expansionsventil vorgesehen, welches auf der dem ersten Expansionsventil gegenüberliegenden Seite des kältemittelstromabwärtigen Wärmeübertragersegmentes angeordnet ist.

Im Wärmepumpenmodus durchströmt das komprimierte Kältemittel zunächst das stets als Kondensator betriebene Wärmeübertragersegment, wo er Wärme an den ihn durchströmenden Luftstrom abgibt. Im Anschluss durchströmt das abgekühlte Kältemittel das erste Expansionsventil, wobei ein Druckabfall eingestellt werden kann, falls das nachgeschaltete Wärmeübertragersegment auf einem niedrigeren Temperaturniveau betrieben werden soll. Dieses Wärmeübertragersegment wird jedoch auch als weiterer Kondensator genutzt, der Wärme an den ihn durchströmenden Luftstrom abgibt, der somit bei der Passage durch die Innenwärmeübertrager-Anordnung eine doppelte Aufheizung erfährt. Im Anschluss erfolgt eine deutliche Entspannung des Kältemittels mittels des zweiten Expansionsventils, sodass der Außenwärmeübertrager als Verdampfer betrieben werden und Wärme aus der ihn durchströmenden Umgebungsluft aufnehmen kann. Im Anschluss gelangt das Kältemittel zurück in den Kompressor.

Im Kühlmodus strömt das komprimierte Kältemittel vom Kompressor ebenfalls zunächst durch das stets als Kondensator genutzte Wärmeübertragersegment, wo es Wärme an den ihn durchströmenden Luftstrom abgibt. Da dieser jedoch in die Fahrgastzelle geleitet wird und im Kühlmodus gerade keine wesentliche Erwärmung gewünscht ist, kann der wesentliche Anteil des Luftstroms mittels einer Bypassklappe um dieses Wärmeübertragersegment herumgeführt werden. Die Gaskühlung bzw. Kondensation in diesem Segment ist daher allerdings äußerst ineffizient. Im Kühlmodus ist das erste Expansionsventil geschlossen, sodass das Kältemittel vom Ausgang des genannten Wärmeübertragersegmentes direkt zum Außenwärmeübertrager strömt, der in diesem Modus als der eigentliche Kondensator wirkt und Wärme an die ihn durchströmende Außenluft gibt. Man beachte, dass der Außenwärmeübertrager im Kühlmodus in umgekehrter Richtung von dem Kältemittel durchströmt wird als im zuvor beschriebenen Wärmepumpenmodus. Hinter dem Außenwärmeübertrager strömt das Kältemittel durch das zweite Expansionsventil zu dem anderen Innenwärmeübertragersegment, welches im Kühlmodus als Verdampfer betrieben wird. Die hierzu notwendige Entspannung des Kältemittels erfolgt im zweiten Expansionsventil. Vom Verdampfer gelangt das Kältemittel dann zurück zum Kompressor. Die DE 10 2012 111 672 A1 offenbart ebenfalls eine Klimatisierungseinrichtung mit erstem und zweitem Expansionsventil.

Nachteilig bei der bekannten Klimatisierungsvorrichtung ist ihre geringe Effizienz im Kühlmodus.

Es ist die Aufgabe der vorliegenden Erfindung, eine gattungsgemäße Klimatisierungsvorrichtung derart zu verbessern, dass sie insbesondere im Kühlmodus effizienter betrieben werden kann.

Diese Aufgabe wird in Verbindung mit den Merkmalen des Oberbegriffs von Anspruch 1 dadurch gelöst, dass
- der erste und der zweite Kältemittel-Leitungsabschnitt über einen vierten Kältemittel-Leitungsabschnitt miteinander verbunden sind,
- der Eingang des zweiten Luft/Kältemittel-Wärmeübertragersegments und der Ausgang des Koppel-Wärmeübertragers über einen fünften Kältemittel-Leitungsabschnitt, der ein drittes Expansionsventil enthält, miteinander verbunden sind und
- der Ausgang des ersten Luft/Kältemittel-Wärmeübertragersegments und der Eingang des Kompressors über einen sechsten Kältemittel-Leitungsabschnitt miteinander verbunden sind,
wobei verstellbare Ventile derart im Kältemittelkreis verteilt angeordnet sind, dass in Abhängigkeit von ihrer Schaltstellung
entweder, in einem Wärmepumpenmodus, der erste, der zweite und der dritte Kältemittel-Leitungsabschnitt mit Kältemittel durchströmbar sind, während im vierten, im fünften und im sechsten Kältemittel-Leitungsabschnitt eine Durchströmung mit Kältemittel unterbunden ist, oder, in einem Kühlmodus, der vierte, fünfte und sechste Kältemittel-Leitungsabschnitt mit Kältemittel durchströmbar sind, während im ersten, im zweiten und im dritten Kältemittel-Leitungsabschnitt eine Durchströmung mit Kältemittel unterbunden ist.

Bevorzugte Ausführungsformen der Erfindung sind Gegenstand der abhängigen Patentansprüche.

Die Erfinder haben erkannt, dass die Effizienzeinbußen im Kühlmodus insbesondere auf die dauerhafte Zuweisung der Kondensatorfunktion an das kältemitteleingangsseitige Innenwärmeübertragersegment, welches hier als zweites Luft/Kältemittel-Wärmeübertragersegment bezeichnet wird, zurückzuführen ist. Sie haben daher mit dem vierten Kältemittel-Leitungsabschnitt eine direkte und das zweite Luft/Kältemittel-Wärmeübertragersegment umgehende Verbindung zwischen dem Eingang des ersten Kältemittel-Leitungsabschnittes und dem Ausgang des zweiten Kältemittel-Leitungsabschnittes geschaffen. Zudem wurden Ventile bereitgestellt, mittels derer das vom Kompressor verdichtete Kältemittel entweder (im Wärmepumpenmodus) über den ersten oder (im Kühlmodus) vierten Kältemittelleitungs-Abschnitt geleitet werden kann.

Im Kühlmodus durchströmt das komprimierte Kältemittel somit zunächst den Koppel-Wärmeübertrager, der dabei als Kondensator wirkt und den Kältemittelkreis thermisch mit einer Wärmesenke koppelt. Dies kann im Fall der Ausgestaltung des Koppel-Wärmeübertragers als Außenwärmeübertrager die Außenluft sein. Im Fall der Ausgestaltung des Koppel-Wärmeübertragers als ein Kühlmittel/Kältemittel-Wärmeübertrager kann dies ein thermisch gekoppelter Kühlmittelkreis, beispielsweise ein Motor- oder Elektronik-Kühlkreis sein. Hinter dem Koppel-Wärmeübertrager durchläuft das Kältemittel den fünften Kältemittel-Leitungsabschnitt und in diesem ein erfindungsgemäß vorgesehenes drittes Expansionsventil, in dem es eine Entspannung erfährt. Erst hinter dem dritten Expansionsventil strömt das abgekühlte und entspannte Kältemittel in das zweite Luft/Kältemittel-Wärmeübertragersegment der Innenwärmeübertrager-Anordnung, welches daher als Verdampfer betrieben werden kann.

Aufgrund der Erfindung ist es möglich, beide Innenwärmeübertragersegmente als Verdampfer zu betreiben, sodass es möglich wird, in der Innenwärmeübertrager-Anordnung ausschließlich zu kühlen und auf die effizienzverringernde, beim Stand der Technik unvermeidbare Heizwirkung des dort als Kondensator genutzten Segmentes zu verzichten. Allerdings ist es auch möglich, das zweite Luft/Kältemittel-Wärmeübertragersegment selbst im Kühlmodus heizend zu betreiben. Hierzu muss lediglich der Druckabfall im dritten Expansionsventil reduziert werden. Im Extremfall ist es sogar möglich, im dritten Expansionsventil auf Druckreduzierung zu verzichten und das zweite Innenwärmeübertragersegment bei maximaler Temperatur zu betreiben, während das erste Expansionsventil zur Realisierung des Druckabfalls genutzt wird, um das erste Innenwärmeübertragersegment als (einzigen) Verdampfer zu betreiben. Neben der Effizienzsteigerung im Kühlmodus ermöglicht die Erfindung somit auch eine größere Flexibilität bei der Ansteuerung des Kältemittelkreises.

Im Wärmepumpenmodus arbeitet die erfindungsgemäße Klimatisierungsvorrichtung ähnlich wie die eingangs beschriebene, gattungsbildende Vorrichtung. Das komprimierte Kältemittel strömt dabei über den ersten Kältemittel-Leitungsabschnitt direkt in das zweite Innenwärmeübertragersegment, welches als Kondensator wirkt. Das nachgeschaltete, erste Innenwärmeübertragersegment arbeitet, je nach Einstellung des ersten Expansionsventils, entweder ebenfalls als Kondensator oder als Verdampfer, wobei gewünschte Temperaturunterschiede der beiden Segmente mit großer Flexibilität einstellbar sind. Im Anschluss durchströmt das Kältemittel dann das zweite Expansionsventil, um dort in jedem Fall so weit entspannt zu werden, dass der sich anschließende Koppel-Wärmeübertrager in jedem Fall als Verdampfer wirkt, um Wärme aus der thermisch gekoppelten Wärmequelle aufzunehmen.

Es resultieren somit also zwei besonders bevorzugte Verfahren zum Betrieb einer erfindungsgemäßen Klimatisierungsvorrichtung. Es ist dies zum einen ein Verfahren gem. Anspruch 8, nämlich ein Verfahren zum Betrieb einer erfindungsgemäßen Klimatisierungsvorrichtung, wobei
- die verstellbaren Ventile in der Schaltstellung des Wärmepumpenmodus geschaltet sind,
- das erste Expansionsventil zur Einstellung eines Temperaturunterschiedes zwischen dem als Kondensator betriebenen zweiten Luft/Kältemittel-Wärmeübertragersegment und dem als Kondensator oder als Verdampfer betriebenen ersten Luft/Kältemittel-Wärmeübertragersegment geregelt wird und
- das zweite Expansionsventil zur Einstellung eines Druckunterschieds zwischen dem ersten Luft/Kältemittel-Wärmeübertragersegment und dem als Verdampfer betriebenen Koppel-Wärmeübertrager geregelt wird.

Zum anderen ist dies ein Verfahren nach Anspruch 9, Verfahren zum Betrieb einer erfindungsgemäßen Klimatisierungsvorrichtung, wobei
- die verstellbaren Ventile in der Schaltstellung des Kühlmodus geschaltet sind,
- das dritte Expansionsventil zur Einstellung eines Druckunterschiedes zwischen dem als Kondensator betriebenen Koppel-Wärmeübertrager und dem als Verdampfer oder als Kondensator betriebenen zweiten Luft/Kältemittel-Wärmeübertragersegment geregelt wird und
- das erste Expansionsventil zur Einstellung eines Temperaturunterschiedes zwischen dem zweiten Luft/Kältemittel-Wärmeübertragersegment und dem als Verdampfer betriebenen ersten Luft/Kältemittel-Wärmeübertragersegment geregelt wird.

Wie erläutert, ist es ein wesentliches Element der Erfindung, dass das Kältemittel je nach beabsichtigtem Modus alternativ entweder durch den ersten oder durch den vierten Kältemittel-Leitungsabschnitt strömt. Um dies zu realisieren, sind insbesondere zwei Varianten besonders vorteilhaft. Bei einer ersten Variante ist vorgesehen, dass an der Verzweigungsstelle von erstem und viertem Kältemittel-Leitungsabschnitt ein schaltbares Zwei-Wege-Ventil angeordnet ist. Bei einer zweiten Varianten ist hingegen vorgesehen, dass jeweils stromabwärts der Verzweigungsstelle von erstem und viertem Kältemittel-Leitungsabschnitt ein schaltbares Absperrventil angeordnet ist. Im ersten Fall sind Aufbau und Ansteuerung des Zwei-Wege-Ventils komplex, wohingegen die Einsparung eines Bauteil als vorteilhaft angesehen werden kann. Im zweiten Fall erhöht sich zwar die Anzahl der Bauteile; deren Aufbau und Ansteuerung ist aber besonders einfach, worin der Vorteil dieser Variante liegt.

Ebenso ist es ein wichtiges Merkmal der Erfindung, dass das Kältemittel je nach gewünschtem Betriebsmodus alternativ durch den dritten oder den sechsten Kältemittel-Leitungsabschnitt strömt. Zur Realisierung dieser Schaltbarkeit werden wiederum zwei Varianten als besonders vorteilhaft angesehen. Bei einer ersten Variante ist vorgesehen, dass an der Mündungsstelle von drittem und sechstem Kältemittel-Leitungsabschnitt ein schaltbares Zwei-Wege-Ventil angeordnet ist. Bei einer zweiten Variante ist hingegen vorgesehen, dass jeweils stromaufwärts der Mündungsstelle von drittem und sechstem Kältemittel-Leitungsabschnitt ein schaltbares Absperrventil angeordnet ist. Bezüglich der Vor- und Nachteile beider Varianten wird in analoger Weise auf das zuvor gesagte verwiesen.

Je nach Wahl des Kältemittels kann es sinnvoll oder gar notwendig sein, den Kältemittelkreis mit einem zusätzlichen, inneren Wärmeübertrager, d.h. einem Kältemittel/Kältemittel-Wärmeübertrager, der unterschiedliche Abschnitte des Kältemittelkreises miteinander thermisch koppelt, auszustatten. Bei einer derartigen Ausgestaltung kann daher vorgesehen sein, dass stromaufwärts des Kompressors der Niederdruck-Ausgang eines als Kältemittel/Kältemittel-Wärmeübertrager ausgebildeten, inneren Wärmeübertragers angeordnet ist, dessen Niederdruck-Eingang stromabwärts der Mündungsstelle von drittem und sechstem Kältemittel-Leitungsabschnitt liegt und dessen Hochdruck-Ein- und Ausgang zwischen dem Ausgang des Koppel-Wärmeübertragers und der Verzweigungsstelle von drittem und fünftem Kältemittel-Leitungsabschnitt liegt. Mit anderen Worten liegt der innere Wärmeübertrager niederdruckseitig unmittelbar vor dem Eingang des Kompressors und hochdruckseitig unmittelbar hinter dem Ausgang des Koppel-Wärmeübertragers.

Weitere Merkmale und Vorteile der Erfindung ergeben sich aus der nachfolgenden, speziellen Beschreibung und den Zeichnungen.

Es zeigen:
- Figur 1: eine erste Ausführungsform einer Innenwärmeübertrager-Anordnung,
- Figur 2: eine zweite Ausführungsform einer Innenwärmeübertrager-Anordnung,
- Figur 3: eine dritte Ausführungsform einer Innenwärmeübertrager-Anordnung,
- Figur 4: eine vierte Ausführungsform einer Innenwärmeübertrager-Anordnung,
- Figur 5: ein Kältemittelkreis unter Verwendung einer Innenwärmetauscher-Anordnung gem. Figur 2,
- Figur 6: der Kältemittelkreis von Figur 5 im Wärmepumpenmodus,
- Figur 7: der Kältemittelkreis von Figur 5 im Kühlmodus,
- Figur 8: ein Kältemittelkreis unter Verwendung einer Innenwärmetauscher-Anordnung gem. Figur 3 und
- Figur 9: ein Kältemittelkreis unter Verwendung einer Innenwärmetauscher-Anordnung gem. Figur 4.

Gleiche Bezugszeichen in den Figuren deuten auf gleiche oder analoge Elemente hin.

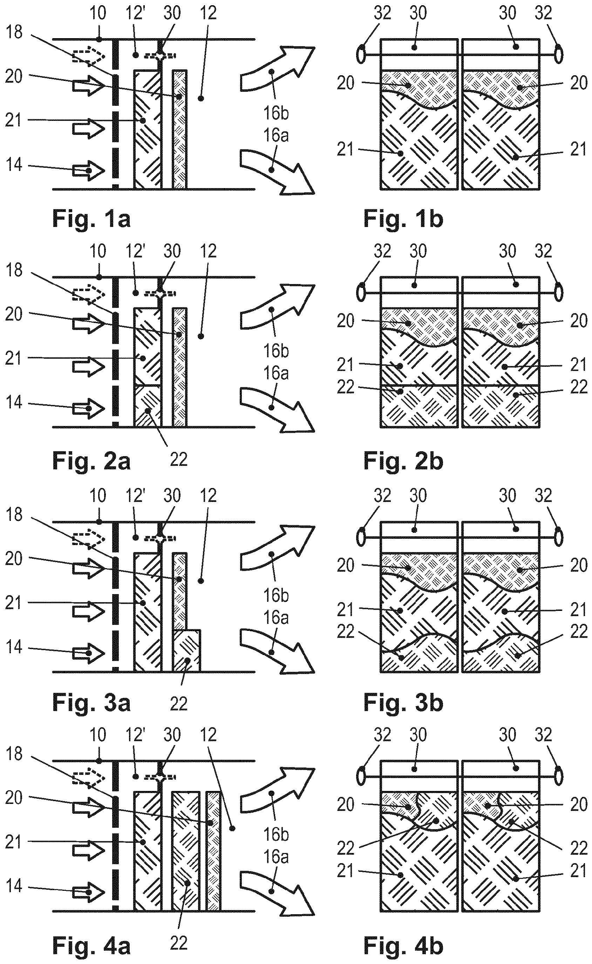

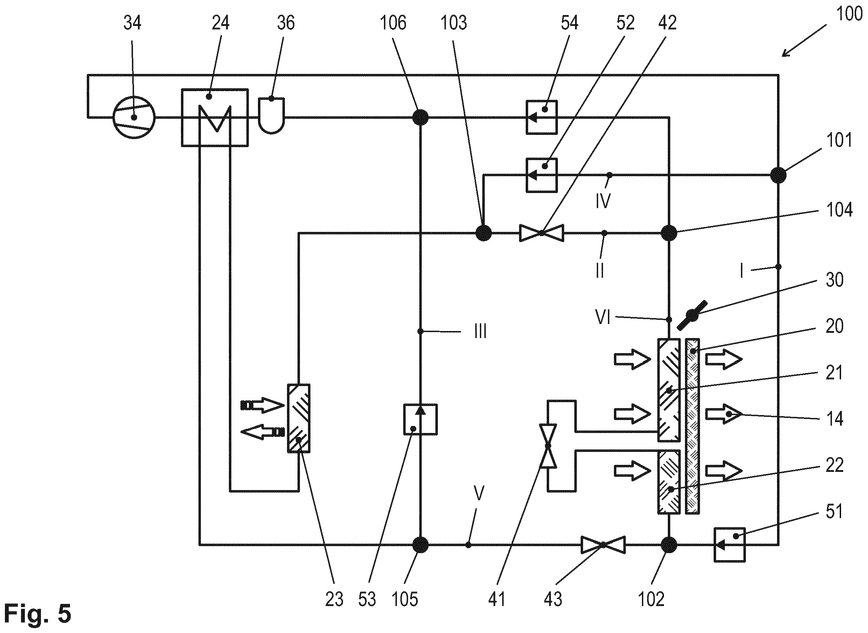

Die Figuren 1-4 zeigen unterschiedliche Innenwärmetauscher-Anordnungen, von denen diejenigen der Figuren 2-4 besonders vorteilhaft im Zusammenhang mit der nachfolgend noch zu erläuternden Kältemittelkreis-Verschaltung, wie sie in den Figuren 5-9 skizziert ist, Einsatz finden können. Die Teilfiguren 1a - 4a stellen dabei jeweils einen vertikalen Längsschnitt parallel zur Luftleitkanalerstreckung dar. Die Teilfiguren 1b-4b stellen jeweils eine teilweise ausgebrochene Ansicht der Wärmeübertrager in Blickrichtung mit dem Luftstrom dar.

In einem nicht im Detail dargestellten Gehäuse 10 ist ein Luftleitkanal 12 ausgebildet. Der Luftleitkanal 12 ist von einem Luftstrom 14 durchströmbar, der typischerweise von einem vorgelagerten Gebläse erzeugt und in einen nachgelagerten Mischraum geleitet wird, von wo aus er über weitere Verteilkanäle zu Ausströmern in der Fahrgastzelle geleitet wird. In den Figuren 1-4 sind rein beispielhaft in den Fußraum der Fahrgastzelle gerichtete Teilströme 16a und in den Kopfraum der Fahrgastzelle gerichtete Teilströme 16b dargestellt.

Gemeinsam ist den Ausführungsformen der Figuren 1-4 ein den Luftleitkanal überspannender, optionaler Filter 18, mit dem Staub, Pollen und andere Verunreinigungen von den nachgeschalteten Innenwärmeübertragern bzw. von der Fahrgastzelle ferngehalten wird. Der Begriff des Innenwärmeübertragers soll andeuten, dass in diesem Element temperierte Luft in das Innere der Fahrgastzelle strömen kann. Weiter weisen die Ausführungsformen der Figuren 1-4 ein aus Widerstandsheizelementen aufgebautes, elektrisches Wärmeübertragersegment 20 auf, der bevorzugt aus sogenannten PTC-Widerstandselementen (PTC: positiv temperature coefficient) besteht. Zwischen dem optionalen Filter 18 und dem elektrischen Wärmeübertragersegment 20, d.h. luftstromaufwärts des elektrischen Wärmeübertragersegments 20, ist bei allen Ausführungsformen der Figuren 1-4 ein erstes Luft/Kältemittel-Wärmeübertragersegment 21 angeordnet. Die Ausführungsformen der Figuren 2-4 weisen zusätzlich ein zweites Luft/Kältemittel-Wärmeübertragersegment 22 auf, das, je nach Ausführungsform, gemeinsam mit dem ersten Luft/Kältemittel-Wärmeübertragersegment 21 einen ersten Wärmeübertrager bildet (Fig. 2), gemeinsam mit dem elektrischen Wärmeübertragersegment 20 einen zweiten Wärmeübertrager bildet (Fig. 3) oder eigenständig einen dritten Wärmeübertragers (Fig. 4) bildet.

Charakteristisch für sämtliche Ausführungsformen der Figuren 1-4 ist eine Bypassklappe 30, die je nach Schaltstellung einen die Wärmeübertragersegmente 20, 21, 22 umgehenden Seitenpfad 12' des Luftleitkanals 12 schließt oder freigibt. Die geschlossene Klappenstellung ist in den Figuren 1-4 mit durchgezogenen Linien dargestellt. In den Teilfiguren 1a-4a ist die offene Klappenstellung zusätzlich mit gestrichelten Linien dargestellt. In der geschlossenen Klappenstellung wird der gesamte Luftstrom 14 durch die Wärmeübertragersegmente 20, 21, 22 gezwungen, sodass eine Wärmeübertragung zwischen dem Kältemittel und der Luft bzw. zwischen den Widerstandsheizelementen und der Luft zustande kommt. In der offenen Klappenstellung hingegen wird der größte Teil des Luftstroms 14 aufgrund des niedrigeren Strömungswiderstandes über den Seitenpfad 12' strömen, sodass im Wesentlichen keine Wärmeübertragung stattfindet.

Nachfolgend sollen die Unterschiede der Ausführungsformen der Figuren 1-4 diskutiert werden.

Figur 1 stellt die einfachste Ausführungsform dar. Das elektrische Wärmeübertragersegment 20 und der erste Luft/Kältemittel-Wärmeübertragersegment 21 nehmen hier im Wesentlichen den gleichen Bereich des Querschnitts des Luftleitkanals 12 ein. Das elektrische Wärmeübertragersegment 20 ist dem ersten Luft/Kältemittel-Wärmeübertragersegment 21 in Luftströmungsrichtung nachgelagert. Die Bypassklappe 30 ist im oberen Bereich des Luftleitkanals 12 angeordnet, sodass dessen Seitenpfad 12' im oberen Randbereich des Luftleitkanals 12 verläuft. Bei Klappenstellungen der Bypassklappe 30, die sowohl einen substanziellen Strömungsanteil durch die Wärmeübertragersegmente 20, 21 als auch einen substanziellen Strömungsanteil über dem Seitenpfad 12' erlauben, führt dies zu einer Temperaturschichtung im nachgelagerten Mischraum. Diese kann insbesondere dazu genutzt werden, einen wärmeren Teilstrom 16a in den Fußbereich und einen kühleren Teilstrom 16b in den Kopfraum der Fahrgastzelle strömen zu lassen. Wie in Teilfigur 1b angedeutet, ist zudem eine laterale Segmentierung der Wärmeübertragersegmente 20, 21 vorgesehen, wobei die einzelnen Lateralsegmente vorzugsweise separat ansteuerbar sind. Verfügt der nachgelagerte Mischraum über eine entsprechende Lateralverzweigung, ist es auf diese Weise möglich, den Fahrer- und Beifahrerraum unterschiedlich zu klimatisieren. Die Bypassklappe 30 ist vorzugsweise automatisiert ansteuerbar, wozu die in Teilfigur 1b angedeuteten Stellantriebe 32 nutzbar sind.

Außer über die Stellung der Bypassklappe 30 und die laterale Segmentierung der Wärmeübertragersegmente 20, 21 kann bei besonders bevorzugten Ausführungsformen eine noch kleinteiligere Temperaturdifferenzierung erfolgen. Dies insbesondere dadurch, dass bei solchen Ausführungsformen das elektrische Wärmeübertragersegment 20 aus einer Vielzahl unabhängig ansteuerbarer Widerstandsheizelemente aufgebaut ist.

Bei der Ausführungsform der Figur 2 ist zusätzlich ein zweites Luft/Kältemittel-Wärmeübertragersegment 22 vorgesehen, das vertikal unterhalb des ersten Luft/Kältemittel-Wärmeübertragersegments 21 angeordnet ist. Insbesondere im Kontext der weiter unten noch zu beschreibenden Kältemittelkreis-Schaltungen ist es möglich, das zweite Luft/Kältemittel-Wärmeübertragersegment 22 heizend und das erste Luft/Kältemittel-Wärmeübertragersegment 21 kühlend zu betreiben, was in einer verbesserten Temperaturschichtung im nachgeordneten Mischraum resultiert. Andererseits ist es auch möglich, das erste und das zweite Wärmeübertragersegment 21, 22 auf gleicher Temperatur oder zwar gemeinsam im Kühl- oder Heizmodus, jedoch mit unterschiedlichen Temperaturen zu betreiben. Das elektrische Wärmeübertragersegment 20 kann als Zusatz- bzw. Gegenheizer genutzt werden. Der Fachmann erkennt, dass auf diese Weise eine höchst flexible Gestaltung der Temperaturschichtung im Mischraum ermöglicht wird. Im Übrigen wird analog auf das oben zu Figur 1 gesagte verwiesen.

Bei der Ausführungsform von Figur 3 ist das zweite Luft/Kältemittel-Wärmeübertragersegment 22 vertikal unterhalb des elektrischen Wärmeübertragersegments 20 und in Luftströmungsrichtung hinter dem ersten Luft/Kältemittel-Wärmeübertragersegment 21 angeordnet. Auch hier resultiert eine sehr flexible Gestaltung der Temperaturschichtung im Mischraum, wobei jedoch der Einfluss des ersten Luft/Kältemittel-Wärmeübertragersegments 21 zu Lasten des Einflusses des elektrischen Wärmeübertragersegments 20 steigt. Im Übrigen wird analog auf das oben zu Figur 1 gesagte verwiesen.

Figur 4 schließlich stellt eine Variante dar, bei der das elektrische Wärmeübertragersegment 20, das erste Luft/Kältemittel-Wärmeübertragersegment 21 und das zweite Luft/Kältemittel-Wärmeübertragersegment 22 sämtlich im Wesentlichen den gleichen Bereich des Luftleitkanalquerschnitts einnehmen. Ähnlich wie bei der Ausführungsform von Figur 1 wird die Temperaturschichtung im Mischraum hier im Wesentlichen durch die Bypassklappe 30 und ggf. zusätzlich durch eine kleinteilige Ansteuerbarkeit des elektrischen Wärmeübertragersegments 20 reguliert. Jedoch ist hier aufgrund der größeren Anzahl steuerbarer Wärmeübertragersegmente 20, 21, 22 eine größere Flexibilität bei der Temperierung gegeben.

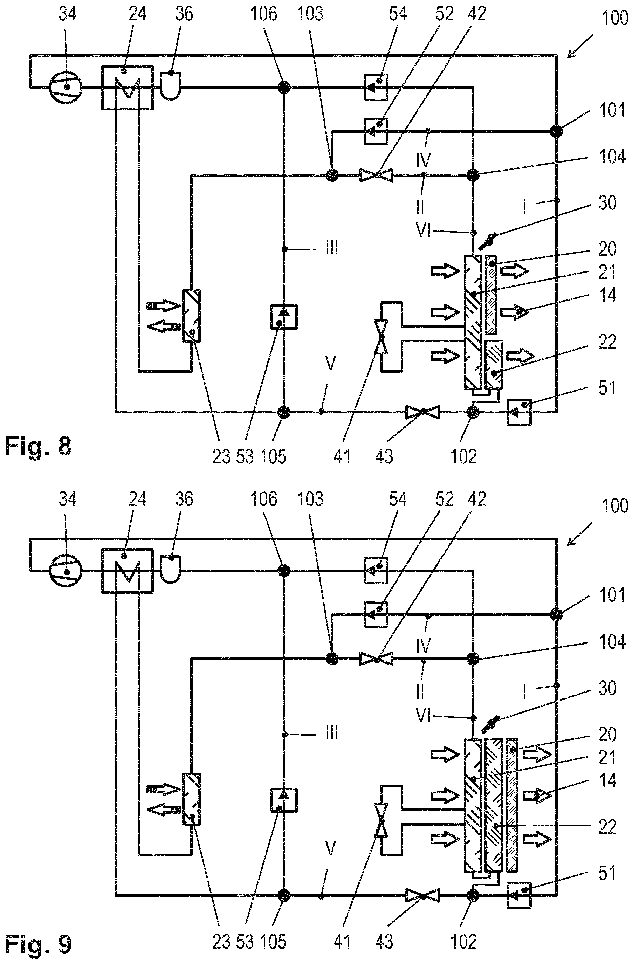

Figur 5 zeigt eine besonders vorteilhafte Verschaltung eines Kältemittelkreises 100, in dem die Innenwärmetauscher-Anordnung von Figur 2 (ohne den selbstverständlich auch hier einsetzbaren, optionalen Filter 18) Einsatz findet. Wie in den Figuren 8 und 9 dargestellt, kann im Wesentlichen die gleiche Schaltung auch unter Verwendung der Innenwärmetauscher-Anordnungen der Figuren 3 und 4 realisiert werden. Die nachfolgenden, auf den Kältemittelkreis 100 von Figur 5 fokussierten Erläuterungen gelten somit unter Berücksichtigung der Anmerkungen zu den Figuren 3 und 4 vollumfänglich auch für die Kältemittelkreise 100 der Figuren 8 und 9.

Der Kältemittelkreis 100 umfasst einen Kompressor 34, mit dem Kältemittel verdichtbar ist. Der Ausgang des Kompressors 34 ist über eine Kältemittelleitung mit einer ersten Verzweigungs- bzw. Mündungsstelle 101 verbunden. Die Begriffe Verzweigungsstelle und Mündungsstelle werden hier austauschbar verwendet. Von der ersten Verzweigungsstelle 101 gehen zwei Kältemittel-Leitungsabschnitte ab, nämlich ein erster Kältemittel-Leitungsabschnitt I und ein vierter Kältemittel-Leitungsabschnitt IV. Der erste Kältemittel-Leitungsabschnitt I enthält ein erstes Absperrventil 51 und endet an einer zweiten Verzweigungs- bzw. Mündungsstelle 102. Der vierte Kältemittel-Leitungsabschnitt IV enthält ein zweites Absperrventil 52 und endet an einer dritten Verzweigungs- bzw. Mündungsstelle 103. Die zweite Mündungsstelle 102 ist mit dem Eingang des zweiten Luft/Kältemittel-Wärmeübertragersegments 22 verbunden. Der Ausgang des zweiten Luft/Kältemittel-Wärmeübertragersegments 22 ist über ein erstes Expansionsventil 41 mit dem Eingang des ersten Luft/Kältemittel-Wärmeübertragersegments 21 verbunden. Der Ausgang des ersten Luft/Kältemittel-Wärmeübertragersegments 21 ist mit einer vierten Verzweigungs- bzw. Mündungsstelle 104 verbunden, die ihrerseits über einen zweiten Kältemittel-Leitungsabschnitt II, der ein zweites Expansionsventil 42 enthält, mit der dritten Mündungsstelle 103 verbunden ist.

Die zweite Mündungsstelle 102 ist weiter über einen fünften Kältemittel-Leitungsabschnitt V, der ein drittes Expansionsventil 43 enthält, mit einer fünften Verweigungs- bzw. Mündungsstelle 105 verbunden. Diese ist einerseits mit dem Hochdruckausgang eines als Kältemittel/Kältemittel-Wärmeübertrager ausgebildeten inneren Wärmeübertragers 24 und andererseits über einen dritten Kältemittel-Leitungsabschnitt III, der ein drittes Absperrventil 53 enthält, mit einer sechsten Verzweigungs- bzw. Mündungsstelle 106 verbunden, welche ihrerseits über einen Sammler 36 mit dem Niederdruckeingang des inneren Wärmeübertragers 24, dessen Niederdruckausgang mit dem Eingang des Kompressors 34 verbunden ist, verbunden ist.

Der Niederdruckeingang des inneren Wärmeübertragers 24 ist mit dem Ausgang eines als Kühlmittel/Kältemittel-Wärmeübertrager ausgebildeten Koppel-Wärmeübertragers 23 verbunden, der kühlmittelseitig Bestandteil eines nicht näher dargestellten Kühlmittelkreises ist, welcher beispielsweise der Kühlung eines Antriebsaggregates und/oder dessen Elektronik dienen kann. Denkbar ist ein Kühlmittelkreis zur Kühlung einer Verbrennungskraftmaschine. Ebenso kann der Kühlmittelkreis zur Kühlung eines elektrischen Antriebsaggregates und/oder dessen Elektronik, insbesondere der Leistungselektronik und der Traktionsbatterien dienen. Denkbar ist auch die Ausgestaltung des Koppel-Wärmeübertragers als ein als Luft/Kältemittel-Wärmeübertrager ausgebildeter Außen-Wärmeübertrager. Dies ist jedoch energetisch weniger günstig.

Eingangsseitig ist der Koppel-Wärmeübertrager 23 mit der dritten Mündungsstelle 103 verbunden.

Schließlich ist die vierte Verzweigungsstelle 104 über einen sechsten Kältemittel-Leitungsabschnitt VI, der ein viertes Absperrventil 54 enthält, mit der sechsten Mündungsstelle 106 verbunden.

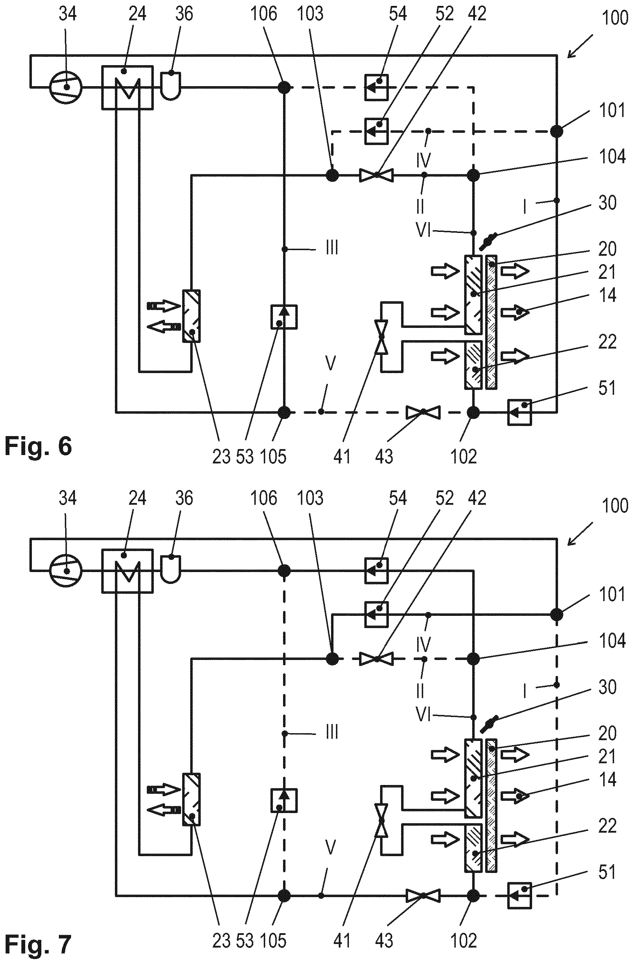

Die bevorzugten Betriebsmoden des Kältemittelkreises 100 von Figur 5 sollen nachfolgend anhand der Figuren 6 und 7 erläutert werden. Diese stellen mit durchgezogenen Linien die jeweils aktiven, d.h. Kältemittel durchströmten Abschnitte der Kältemittelleitung dar. Gestrichelt sind diejenigen Abschnitte dargestellt, die im jeweiligen Modus abgesperrt, d.h. nicht von Kältemittel durchströmt sind.

Figur 6 zeigt den Kältemittelkreis 100 im Wärmepumpenmodus. Hierzu ist das erste Absperrventil 51 geöffnet und das zweite Absperrventil 52 geschlossen. Vom Kompressor 34 komprimiertes Kältemittel strömt somit durch den ersten Kältemittel-Leitungsabschnitt I, wohingegen der vierte Kältemittel-Leitungsabschnitt IV undurchströmt bleibt. Alternativ zur Anordnung der Absperrventile 51, 52 im ersten bzw. vierten Kältemittel-Leitungsabschnitt I, IV wäre es auch möglich, an der ersten Verzweigungsstelle 101 ein schaltbares Zwei-Wege-Ventil zu installieren. Zudem ist im Wärmepumpenmodus das dritte Absperrventil 53 geöffnet und das vierte Absperrventil 54 geschlossen. Damit kann der dritte Kältemittel-Leitungsabschnitt III von Kältemittel durchströmt werden, während der sechste Kältemittel-Leitungsabschnitt VI gesperrt ist. Alternativ zur Anordnung des dritten und vierten Absperrventils 53, 54 im dritten bzw. sechsten Kältemittel-Leitungsabschnitt III, VI könnte auch ein Zweiwegeventil an der sechsten Mündungsstelle 106 Einsatz finden.

Zudem zeichnet sich der Wärmepumpenmodus zusätzlich dadurch aus, dass der fünfte Kältemittel-Leitungsabschnitt V ebenfalls gesperrt ist. Bei der dargestellten Ausführungsform wird hierzu das dritte Expansionsventil 43 genutzt. Alternativ könnte auch ein zusätzliches Absperrventil im fünften Kältemittel-Leitungsabschnitt V hierfür Einsatz finden.

Das im Kompressor 34 komprimierte Kältemittel strömt somit durch den ersten Kältemittel-Leitungsabschnitt I in das zweite Luft/Kältemittel-Wärmeübertragersegment 22. Dieses wird in diesem Modus als Kondensator betrieben und überträgt Wärme vom Kältemittel auf den Luftstrom 14. Vom Ausgang des zweiten Luft/Kältemittel-Wärmeübertragersegments 22 gelangt das Kältemittel über das erste Expansionsventil 41 zum des ersten Luft/Kältemittel-Wärmeübertragersegment 21. Je nach Stellung des ersten Expansionsventils 41 kann der Druckabfall dabei so eingestellt werden, dass das erste Luft/Kältemittel-Wärmeübertragersegment 21 entweder ebenfalls als Kondensator auf im Wesentlichen gleichem Temperaturniveau wie das zweite Luft/Kältemittel-Wärmeübertragersegment 22, als Kondensator, jedoch auf niedrigerem Temperaturniveau als das zweite Luft/Kältemittel-Wärmeübertragersegment 22 oder als Verdampfer, der dem ihn durchströmenden Luftstrom 14 Wärme entzieht, betrieben werden. Die Einstellung des ersten Expansionsventils 41 erfolgt typischerweise im Rahmen einer Regelung zur Erzielung einer gewünschten Temperaturschichtung im nachgelagerten, nicht gesondert dargestellten Mischraum. Bei der dargestellten Ausführungsform strömt der Luftstrom 14 hinter dem ersten und zweiten Luft/Kältemittel-Wärmeübertragersegment 21, 22 noch durch das elektrische Wärmeübertragersegment 20, wo eine Zusatz- oder Gegenheizung erfolgen kann. Im Hinblick auf die Verschaltung des Kältemittelkreises 100 kann das elektrische Wärmeübertragersegment 20 jedoch als optional angesehen werden.

Hinter dem ersten Luft/Kältemittel-Wärmeübertragersegment 21 strömt das Kältemittel an der vierten Verzweigungsstelle 104 in den zweiten Kältemittel-Leitungsabschnitt II, da aufgrund der Sperrstellung des vierten Absperrventils 54 der ebenfalls von der vierten Verzweigungsstelle 104 abgehende sechste Kältemittel-Leitungsabschnitt VI gesperrt ist. Im zweiten Expansionsventil 42, welches im zweiten Kältemittel-Leitungsabschnitt II enthalten ist, erfolgt eine weitere Entspannung des Kältemittels, dessen Druck in jedem Fall so niedrig sein sollte, dass der nachgeschaltete Koppel-Wärmeübertrager 23 als Verdampfer betrieben wird, der Wärme aus dem angeschlossenen Kühlmittelkreis aufnimmt.

Hinter dem Koppel-Wärmeübertrager 23 durchströmt das Kältemittel den Hochdruckteil des inneren Wärmeübertragers 24. Dieser ist, wie der Fachmann erkennen wird, jedoch ebenso wie der Sammler 36 rein optional und im Wesentlichen von der Wahl des Kältemittels abhängig. Denkbar ist auch eine direkte Verbindung des Ausgangs des Koppel-Wärmeübertrager 23 mit der fünften Mündungsstelle 105, mit welcher bei der dargestellten Ausführungsform der Hochdruckausgang des inneren Wärmeübertragers 24 verbunden ist.

Von hier aus durchströmt das Kältemittel das geöffnete dritte Absperrventil 53 und den dritten Kältemittel-Leitungsabschnitt III und gelangt über die sechste Mündungsstelle 106, den Niederdruckteil des inneren Wärmeübertragers 24 zurück zum Kompressor 34.

Figur 7 zeigt den Kältemittelkreis 100 im Kühlmodus. Hierbei ist das erste Absperrventil 51 geschlossen und das zweite Absperrventil 52 geöffnet. Zudem ist das dritte Absperrventil 53 geschlossen und das vierte Absperrventil 54 geöffnet. Das dritte Expansionsventil 53 wird in diesem Modus geregelt betrieben. Das zweite Expansionsventil 52 ist hingegen geschlossen und sperrt den zweiten Kältemittel-Leitungsabschnitt II, wofür bei einer alternativen Ausführungsform auch ein zusätzliches Absperrventil im zweiten Kältemittel-Leitungsabschnitt II genutzt werden könnte.

Das vom Kompressor 34 komprimierte Kältemittel zweigt am ersten Verzweigungspunkt 101 in den vierten Kältemittel-Leitungsabschnitt IV ab und gelangt über die dritte Mündungsstelle 103 zum Eingang des Koppel-Wärmeübertragers 23, der in diesem Modus als Kondensator betrieben wird und Wärme an den angeschlossenen Kühlmittelkreis abgibt. Nach Durchlauf des Hochdruckteils des optionalen inneren Wärmeübertragers 24 strömt das Kältemittel am fünften Verzweigungspunkt 105 aufgrund des geschlossenen dritten Absperrventils 53 in den fünften Kältemittel-Leitungsabschnitt V, wo es mittels des dritten Expansionsventils 43 entspannt wird.

Da das erste Absperrventil 51 geschlossen ist, strömt das entspannte Kältemittel vom zweiten Mündungspunkt 102 in das zweite Luft/Kältemittel-Wärmeübertragersegment 22. Je nach Einstellung des dritten Expansionsventils 43 kann das zweite Luft/Kältemittel-Wärmeübertragersegment 22 dabei als weiterer Kondensator genutzt werden, um Wärme an den ihn durchströmenden Anteil des Luftstroms 14 abzugeben. Es kann jedoch auch als Verdampfer betrieben werden und Wärme aus dem ihn durchströmenden Anteil des Luftstroms 14 aufnehmen. Die Einstellung wird in der Praxis je nach der gewünschten Temperaturschichtung im nicht dargestellten Mischraum geregelt. Kältemittelseitig hinter dem zweiten Luft/Kältemittel-Wärmeübertragersegment 22 erfährt das Kältemittel im ersten Expansionsventil 41 eine weitere Entspannung und durchströmt im Anschluss das erste Luft/Kältemittel-Wärmeübertragersegment 21, das in diesem Modus in jedem Fall als Verdampfer betrieben wird, um Wärme aus dem ihn durchströmenden Anteil des Luftstroms 14 aufzunehmen.

An dem kältemittelseitig hinter dem ersten Luft/Kältemittel-Wärmeübertragersegment 21 gelegenen, vierten Verzweigungspunkt 104 strömt das Kältemitte aufgrund des geschlossenen zweiten Expansionsventils 42 in den sechsten Kältemittel-Leitungsabschnitt und durch das geöffnete vierte Absperrventil 54 zum Sammler 36 und durch den Niederdruckteil des optionalen inneren Wärmeübertragers 24 zurück zum Kompressor 34.

Der Fachmann wird erkennen, dass die drei nicht optionalen Wärmeübertrager bzw. Wärmeübertragersegmente, nämlich das erste Luft/Kältemittel-Wärmeübertragersegment 21, das zweite Luft/Kältemittel-Wärmeübertragersegment 22 und der Koppel-Wärmeübertrager 23 im beschriebenen Kältemittelkreis 100 jeweils sowohl als Kondensator als auch als Verdampfer betrieben werden können. Durch geeignete Einstellung weniger Schalt- und Regelelemente ist beim Kältemittelkreis 100 der Betrieb in zwei grundsätzlichen Moden, nämlich einem Wärmepumpenmodus und einem Kühlmodus möglich, wobei innerhalb jedes der beiden Moden je nach Bedarf eine differenzierte Temperaturschichtung in dem luftseitig den Innenwärmeübertragern nachgeschalteten Mischraum möglich ist. Auf diese Weise lässt sich die Temperaturverteilung in der Fahrgastzelle höchst flexibel und individuell anpassen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Rahmen der Ansprüche ein breites Spektrum an Variationsmöglichkeiten an die Hand gegeben.

### Bezugszeichenliste

- 10: Gehäuse
- 12: Luftleitkanal
- 12': Seitenpfad von 12
- 14: Luftstrom
- 16a: Luftstromanteil zum Fußraum
- 16b: Luftstromanteil zum Kopfraum
- 18: Filter
- 20: elektrisches Wärmeübertragersegment
- 21: erstes Luft/Kältemittel-Wärmeübertragersegment
- 22: zweites Luft/Kältemittel-Wärmeübertragersegment
- 23: Koppel-Wärmeübertrager
- 24: innerer Wärmeübertrager
- 30: Bypassklappe
- 32: Stellantrieb
- 34: Kompressor
- 36: Sammler
- 41: erstes Expansionsventil
- 42: zweites Expansionsventil
- 43: drittes Expansionsventil
- 51: erstes Absperrventil
- 52: zweites Absperrventil
- 53: drittes Absperrventil
- 54: viertes Absperrventil
- 100: Kältemittelkreis
- 101: erste Verzweigungs-/Mündungsstelle
- 102: zweite Verzweigungs-/Mündungsstelle
- 103: dritte Verzweigungs-/Mündungsstelle
- 104: vierte Verzweigungs-/Mündungsstelle
- 105: fünfte Verzweigungs-/Mündungsstelle
- 106: sechste Verzweigungs-/Mündungsstelle
- I: erster Kältemittel-Leitungsabschnitt
- II: zweiter Kältemittel-Leitungsabschnitt
- III: dritter Kältemittel-Leitungsabschnitt
- IV: vierter Kältemittel-Leitungsabschnitt
- V: fünfter Kältemittel-Leitungsabschnitt
- VI: sechster Kältemittel-Leitungsabschnitt

## Patentansprüche

1. Klimatisierungsvorrichtung für ein Kraftfahrzeug, mit einem Kältemittelkreis (100), welcher
- einen Kompressor (34),
- eine eingangsseitig über einen ersten Kältemittel-Leitungsabschnitt mit dem Ausgang des Kompressors verbundene, von Anteilen eines in eine Fahrgastzelle des Kraftfahrzeugs leitbaren Luftstroms durchströmbare Innenwärmeübertrager-Anordnung, umfassend
• ein erstes Luft/Kältemittel-Wärmeübertragersegment (21), das als Verdampfer des Kältemittelkreises (100) betreibbar ist,
• ein dem ersten Luft/Kältemittel-Wärmeübertragersegment (21) in Strömungsrichtung des Kältemittels vorgeschaltetes, erstes Expansionsventil (41) und
• ein dem ersten Expansionsventil (41) in Strömungsrichtung des Kältemittels vorgeschaltetes, zweites Luft/Kältemittel-Wärmeübertragersegment (22), das als Kondensator des Kältemittelkreises (100) betreibbar ist,
- ein der Innenwärmeübertrager-Anordnung in Strömungsrichtung des Kältemittels nachgeschaltetes, zweites Expansionsventil (42) und
- einen eingangsseitig über einen zweiten Kältemittel-Leitungsabschnitt (II) mit dem zweiten Expansionsventil (42) verbundenen, thermisch mit einer Wärmequelle oder -senke verbundenen Koppel-Wärmeübertrager (23), dessen Ausgang über einen dritten Kältemittel-Leitungsabschnitt (III) mit dem Eingang des Kompressors (34) verbunden ist,
umfasst, und- der Ausgang des ersten Luft/Kältemittel-Wärmeübertragersegments (21) und der Eingang des Kompressors (34) über einen sechsten Kältemittel-Leitungsabschnitt (VI) miteinander verbunden sind, **dadurch gekennzeichnet, dass**
- der erste und der zweite Kältemittel-Leitungsabschnitt (I / II) über einen vierten Kältemittel-Leitungsabschnitt (IV) miteinander verbunden sind,
- der Eingang des zweiten Luft/Kältemittel-Wärmeübertragersegments (22) und der Ausgang des Koppel-Wärmeübertragers über einen fünften Kältemittel-Leitungsabschnitt (V), der ein drittes Expansionsventil (43) enthält, miteinander verbunden sind und
- verstellbare Ventile (42, 43, 51, 52, 52, 53, 54) derart im Kältemittelkreis (100) verteilt angeordnet sind, dass in Abhängigkeit von ihrer Schaltstellung entweder, in einem Wärmepumpenmodus, der erste, der zweite und der dritte Kältemittel-Leitungsabschnitt (I / II / III) mit Kältemittel durchströmbar sind, während im vierten, im fünften und im sechsten Kältemittel-Leitungsabschnitt (IV / V /VI) eine Durchströmung mit Kältemittel unterbunden ist,
oder, in einem Kühlmodus, der vierte, fünfte und sechste Kältemittel-Leitungsabschnitt (IV / V / VI) mit Kältemittel durchströmbar sind, während im ersten, im zweiten und im dritten Kältemittel-Leitungsabschnitt (I / II / III) eine Durchströmung mit Kältemittel unterbunden ist.

2. Klimatisierungsvorrichtung nach Anspruch 1,
**dadurch gekennzeichnet,**
**dass** an der Verzweigungsstelle von erstem und viertem Kältemittel-Leitungsabschnitt ein schaltbares Zwei-Wege-Ventil angeordnet ist.

3. Klimatisierungsvorrichtung nach Anspruch 1,
**dadurch gekennzeichnet,**
**dass** jeweils stromabwärts der Verzweigungsstelle (101) von erstem und viertem Kältemittel-Leitungsabschnitt (I / IV) ein schaltbares Absperrventil (51, 52) angeordnet ist.

4. Klimatisierungsvorrichtung nach einem der vorangehenden Ansprüche,
**dadurch gekennzeichnet,**
**dass** an der Mündungsstelle von drittem und sechstem Kältemittel-Leitungsabschnitt ein schaltbares Zwei-Wege-Ventil angeordnet ist.

5. Klimatisierungsvorrichtung nach einem der Ansprüche 1 bis 3,
**dadurch gekennzeichnet,**
**dass** jeweils stromaufwärts der Mündungsstelle (106) von drittem und sechstem Kältemittel-Leitungsabschnitt (I / VI) ein schaltbares Absperrventil (53, 54) angeordnet ist.

6. Klimatisierungsvorrichtung nach einem der vorangehenden Ansprüche,
**dadurch gekennzeichnet,**
**dass** stromaufwärts des Kompressors (34) der Niederdruck-Ausgang eines als Kältemittel/Kältemittel-Wärmeübertrager ausgebildeten, inneren Wärmeübertragers (24) angeordnet ist, dessen Niederdruck-Eingang stromabwärts der Mündungsstelle (106) von drittem und sechstem Kältemittel-Leitungsabschnitt (III / VI) liegt und dessen Hochdruck-Ein- und Ausgang zwischen dem Ausgang des Koppel-Wärmeübertragers (23) und der Verzweigungsstelle (105) von drittem und fünftem Kältemittel-Leitungsabschnitt (III / IV) liegt.

7. Klimatisierungsvorrichtung nach einem der vorangehenden Ansprüche,
**dadurch gekennzeichnet,**
**dass** der Koppel-Wärmeübertrager (23) als ein Kühlmittel/Kältemittel-Wärmeübertrager ausgebildet ist, der kühlmittelseitig thermisch mit einem Antriebsaggregat und/oder dessen elektrischen Komponenten verbunden ist.

8. Verfahren zum Betrieb einer Klimatisierungsvorrichtung nach einem der vorangehenden Ansprüche, wobei
- die verstellbaren Ventile (43, 51, 52, 52, 53, 54) in der Schaltstellung des Wärmepumpenmodus geschaltet sind,
- das erste Expansionsventil (41) zur Einstellung eines Temperaturunterschiedes zwischen dem als Kondensator betriebenen zweiten Luft/Kältemittel-Wärmeübertragersegment (22) und dem als Kondensator oder als Verdampfer betriebenen ersten Luft/Kältemittel-Wärmeübertragersegment (21) geregelt wird und
- das zweite Expansionsventil (42) zur Einstellung eines Druckunterschieds zwischen dem ersten Luft/Kältemittel-Wärmeübertragersegment (21) und dem als Verdampfer betriebenen Koppel-Wärmeübertrager (23) geregelt wird.

9. Verfahren zum Betrieb einer Klimatisierungsvorrichtung nach einem der Ansprüche 1 bis 7, wobei
- die verstellbaren Ventile (42, 51, 52, 52, 53, 54) in der Schaltstellung des Kühlmodus geschaltet sind,
- das dritte Expansionsventil (43) zur Einstellung eines Druckunterschiedes zwischen dem als Kondensator betriebenen Koppel-Wärmeübertrager (23) und dem als Verdampfer oder als Kondensator betriebenen zweiten Luft/Kältemittel-Wärmeübertragersegment (22) geregelt wird und
- das erste Expansionsventil (41) zur Einstellung eines Temperaturunterschiedes zwischen dem zweiten Luft/Kältemittel-Wärmeübertragersegment (22) und dem als Verdampfer betriebenen ersten Luft/Kältemittel-Wärmeübertragersegment (21) geregelt wird.

## Claims

1. Air-conditioning apparatus for a motor vehicle, having a refrigerant circuit (100) which comprises
- a compressor (34),
- an internal heat exchanger arrangement which at the input end is connected to the output of the compressor via a first refrigerant line section and through which portions of an air flow which can be conducted into a passenger compartment of the motor vehicle can flow, comprising
• a first air/refrigerant heat exchanger segment (21) which can be operated as an evaporator of the refrigerant circuit (100),
• a first expansion valve (41) which can be connected upstream of the first air/refrigerant heat exchanger segment (21) in the flow direction of the refrigerant, and
• a second air/refrigerant heat exchanger segment (22) which is connected upstream of the first expansion valve (41) in the direction of flow of the refrigerant and which can be operated as a condenser of the refrigerant circuit (100),
- a second expansion valve (42) which is connected downstream of the internal heat exchanger arrangement in the direction of flow of the refrigerant, and
- a coupling heat exchanger (23) which at the input end is connected to the second expansion valve (42) via a second refrigerant line section (II) and is thermally connected to a heat source or heat sink, the output of the said coupling heat exchanger being connected to the input of the compressor (34) via a third refrigerant line section (III), and
- the output of the first air/refrigerant heat exchanger segment (21) and the input of the compressor (34) are connected to one another via a sixth refrigerant line section (VI),
**characterized in that**
- the first and the second refrigerant line section (I/II) are connected to one another via a fourth refrigerant line section (IV),
- the input of the second air/refrigerant heat exchanger segment (22) and the output of the coupling heat exchanger are connected to one another via a fifth refrigerant line section (V) which contains a third expansion valve (43), and
- adjustable valves (42, 43, 51, 52, 52, 53, 54) are arranged in a manner distributed in the refrigerant circuit (100) in such a way that, depending on their switching position, refrigerant can flow through the first, the second and the third refrigerant line section (I/II/III), while throughflow of refrigerant is suppressed in the fourth, in the fifth and in the sixth refrigerant line section (IV/V/VI), in a heat pump mode,
or refrigerant can flow through the fourth, fifth and sixth refrigerant line section (IV/V/VI), while throughflow of refrigerant is suppressed in the first, in the second and in the third refrigerant line section (I/II/III), in a cooling mode.

2. Air-conditioning apparatus according to Claim 1,
**characterized**
**in that** a switchable two-way valve is arranged at the branch point from the first and fourth refrigerant line section.

3. Air-conditioning apparatus according to Claim 1,
**characterized**
**in that** a switchable shut-off valve (51, 52) is arranged downstream of the branch point (101) from the first and fourth refrigerant line section (I/IV) in each case.

4. Air-conditioning apparatus according to one of the preceding claims,
**characterized**
**in that** a switchable two-way valve is arranged at the opening point from the third and sixth refrigerant line section.

5. Air-conditioning apparatus according to one of Claims 1 to 3,
**characterized**
**in that** a switchable shut-off valve (53, 54) is arranged upstream of the opening point (106) from the third and sixth refrigerant line section (I/VI) in each case.

6. Air-conditioning apparatus according to one of the preceding claims,
**characterized**
**in that** the low-pressure output of an inner heat exchanger (24) which is designed as a refrigerant/refrigerant heat exchanger is arranged upstream of the compressor (34), the low-pressure input of which inner heat exchanger is situated downstream of the opening point (106) from the third and sixth refrigerant line section (III/VI) and the high-pressure input and output of which inner heat exchanger is situated between the output of the coupling heat exchanger (23) and the branch point (105) from the third and fifth refrigerant line section (III/IV).

7. Air-conditioning apparatus according to one of the preceding claims,
**characterized**
**in that** the coupling heat exchanger (23) is designed as a coolant/refrigerant heat exchanger which on the coolant side is thermally connected to a drive assembly and/or to the electrical components of the said drive assembly.

8. Method for operating an air-conditioning apparatus according to one of the preceding claims, wherein
- the adjustable valves (43, 51, 52, 52, 53, 54) are switched in the switching position of the heat pump mode,
- the first expansion valve (41) is regulated for adjusting a temperature difference between the second air/refrigerant heat exchanger segment (22) which is operated as a condenser and the first air/refrigerant heat exchanger segment (21) which is operated as a condenser or as an evaporator, and
- the second expansion valve (42) is regulated for adjusting a pressure difference between the first air/refrigerant heat exchanger segment (21) and the coupling heat exchanger (23) which is operated as an evaporator.

9. Method for operating an air-conditioning apparatus according to one of Claims 1 to 7, wherein
- the adjustable valves (42, 51, 52, 52, 53, 54) are switched in the switching position of the cooling mode,
- the third expansion valve (43) is regulated for adjusting a pressure difference between the coupling heat exchanger (23) which is operated as a condenser and the second air/refrigerant heat exchanger segment (22) which is operated as an evaporator or as a condenser, and
- the first expansion valve (41) is regulated for adjusting a temperature difference between the second air/refrigerant heat exchanger segment (22) and the first air/refrigerant heat exchanger segment (21) which is operated as an evaporator.

## Revendications

1. Dispositif de climatisation pour un véhicule automobile, comprenant un circuit de fluide caloporteur (100) qui comprend
- un compresseur (34),
- un agencement d'échangeur de chaleur interne connecté du côté de l'entrée par le biais d'une première portion de conduite de fluide caloporteur à la sortie du compresseur, pouvant être parcouru par des portions d'un flux d'air pouvant être dirigé dans un habitacle du véhicule automobile, comprenant
• un premier segment d'échangeur de chaleur air/fluide caloporteur (21) qui peut être utilisé en tant qu'évaporateur du circuit de fluide caloporteur (100),
• une première soupape d'expansion (41) montée en amont du premier segment d'échangeur de chaleur air/fluide caloporteur (21) dans la direction d'écoulement du fluide caloporteur et
• un deuxième segment d'échangeur de chaleur air/fluide caloporteur (22) monté en amont de la première soupape d'expansion (41) dans la direction d'écoulement du fluide caloporteur, qui peut être utilisé en tant que condenseur du circuit de fluide caloporteur (100),
- une deuxième soupape d'expansion (42) montée en aval de l'agencement d'échangeur de chaleur interne dans la direction d'écoulement du fluide caloporteur et
- un échangeur de chaleur d'accouplement (23) connecté du côté de l'entrée par le biais d'une deuxième portion de conduite de fluide caloporteur (II) à la deuxième soupape d'expansion (42), connecté thermiquement à une source ou un puits de chaleur, dont la sortie est connectée par le biais d'une troisième portion de conduite de fluide caloporteur (III) à l'entrée du compresseur (34), et
- la sortie du premier segment d'échangeur de chaleur air/fluide caloporteur (21) et l'entrée du compresseur (34) sont connectées l'une à l'autre par le biais d'une sixième portion de conduite de fluide caloporteur (VI),
**caractérisé en ce que**
- la première et la deuxième portion de conduite de fluide caloporteur (I/II) sont connectées l'une à l'autre par le biais d'une quatrième portion de conduite de fluide caloporteur (IV),
- l'entrée du deuxième segment d'échangeur de chaleur air/fluide caloporteur (22) et la sortie de l'échangeur de chaleur d'accouplement sont connectées l'une à l'autre par le biais d'une cinquième portion de conduite de fluide caloporteur (V) qui contient une troisième soupape d'expansion (43), et
- des soupapes réglables (42, 43, 51, 52, 52, 53, 54) sont disposées de manière répartie dans le circuit de fluide caloporteur (100) de telle sorte qu'en fonction de leur position de commutation, soit, dans un mode de pompe à chaleur, la première, la deuxième et la troisième portion de conduite de fluide caloporteur (I/II/III) peuvent être parcourues par du fluide caloporteur, tandis que dans la quatrième, dans la cinquième et dans la sixième portion de conduite de fluide caloporteur (IV/V/VI), le fluide caloporteur ne peut pas circuler,
soit, dans un mode de refroidissement, la quatrième, cinquième et sixième portion de conduite de fluide caloporteur (IV/V/VI) peuvent être parcourues par du fluide caloporteur tandis que dans la première, dans la deuxième et dans la troisième portion de conduite de fluide caloporteur (I/II/III), le fluide caloporteur ne peut pas circuler.

2. Dispositif de climatisation selon la revendication 1,
**caractérisé en ce**
**qu'**au niveau du point de branchement de la première et de la quatrième portion de conduite de fluide caloporteur est disposée une soupape à deux voies commutable.

3. Dispositif de climatisation selon la revendication 1,
**caractérisé en ce**
**qu'**à chaque fois en aval du point de branchement (101) de la première et de la quatrième portion de conduite de fluide caloporteur (I/IV), est disposée une soupape d'arrêt commutable (51, 52).

4. Dispositif de climatisation selon l'une quelconque des revendications précédentes,
**caractérisé en ce**
**qu'**au niveau du point d'embouchure de la troisième et de la sixième portion de conduite de fluide caloporteur, est disposée une soupape à deux voies commutable.

5. Dispositif de climatisation selon l'une quelconque des revendications 1 à 3,
**caractérisé en ce**
**qu'**à chaque fois en amont du point d'embouchure (106) de la troisième et de la sixième portion de conduite de fluide caloporteur (I/VI), est disposée une soupape d'arrêt commutable (53, 54).

6. Dispositif de climatisation selon l'une quelconque des revendications précédentes,
**caractérisé en ce**
**qu'**en amont du compresseur (34), est disposée la sortie basse pression d'un échangeur de chaleur interne (24) réalisé sous forme d'échangeur de chaleur fluide caloporteur/fluide caloporteur, dont l'entrée basse pression est située en aval du point d'embouchure (106) de la troisième et de la sixième portion de conduite de fluide caloporteur (III/VI) et dont l'entrée et la sortie haute pression sont situées entre la sortie de l'échangeur de chaleur d'accouplement (23) et le point de branchement (105) de la troisième et de la cinquième portion de conduite de fluide caloporteur (III/IV).

7. Dispositif de climatisation selon l'une quelconque des revendications précédentes,
**caractérisé en ce que**
l'échangeur de chaleur d'accouplement (23) est réalisé sous forme d'échangeur de chaleur réfrigérant/fluide caloporteur, qui est connecté thermiquement du côté du réfrigérant à un groupe motopropulseur et/ou à ses composants électriques.

8. Procédé pour faire fonctionner un dispositif de climatisation selon l'une quelconque des revendications précédentes, dans lequel
- les soupapes réglables (43, 51, 52, 52, 53, 54) sont branchées dans la position de commutation du mode de pompe à chaleur,
- la première soupape d'expansion (41) est réglée pour l'ajustement d'une différence de température entre le deuxième segment d'échangeur de chaleur air/fluide caloporteur (22) utilisé en tant que condenseur et le premier segment d'échangeur de chaleur air/fluide caloporteur (21) utilisé en tant qu'évaporateur et
- la deuxième soupape d'expansion (42) est réglée pour l'ajustement d'une différence de pression entre le premier segment d'échangeur de chaleur air/fluide caloporteur (21) et l'échangeur de chaleur d'accouplement (23) utilisé en tant qu'évaporateur.

9. Procédé pour faire fonctionner un dispositif de climatisation selon l'une quelconque des revendications 1 à 7, dans lequel
- les soupapes réglables (42, 51, 52, 52, 53, 54) sont branchées dans la position de commutation du mode de refroidissement,
- la troisième soupape d'expansion (43) est réglée pour l'ajustement d'une différence de pression entre l'échangeur de chaleur d'accouplement (23) utilisé en tant que condenseur et le deuxième segment d'échangeur de chaleur air/fluide caloporteur (22) utilisé en tant qu'évaporateur ou en tant que condenseur et
- la première soupape d'expansion (41) est réglée pour l'ajustement d'une différence de température entre le deuxième segment d'échangeur de chaleur air/fluide caloporteur (22) et le premier segment d'échangeur de chaleur air/fluide caloporteur (21) utilisé en tant qu'évaporateur.
